# EUROPEAN PATENT APPLICATION

(11) **EP 1 592 179 A1**
(43) Date of publication of application: **02.11.2005**
(21) Application number: 05252703.3
(22) Date of filing: 29.04.2005
(51) Int. Cl.: H04L 12/28

(54) **Electronic appliance with communication means**

(30) Priority: 30.04.2004 JP 2004136917
(71) Applicant: SONY CORPORATION, Tokyo 141-0001 (JP)
(72) Inventor: Yoneda, Michiaki, Shinagawa-ku Tokyo (JP); Yoritate, Masataka, Shinagawa-ku Tokyo (JP)
(74) Representative: Nicholls, Michael John

(57) **Abstract**

The present invention provides an electronic appliance that reduces the load of processing the data transmitted from an external apparatus with which it does not require any communication. The electronic appliance is equipped with a network connection feature, and includes an interface section that intermediates between the electronic appliance and a communication path of a network (5), a temporary storage section that temporarily stores the data received by a reception section (43), a communication section that communicates with an external appliances existing on the network (5), an attribute information acquisition section that acquires attribute information of the external appliances, a judging section that judges if it is necessary or unnecessary to communicate with the external appliance on the basis of the attribute information of the external appliance (42), an appliance address recording section that records the address of the external appliance on the network depending on the outcome of the judgment of the judging section, and a data selection control section that rejects the data from the external appliance if it does not require any communication but stores the data from the external appliance in the temporary storage section if it requires communication by referring to the appliance address recording section.

## Description

This invention relates to an electronic appliance equipped with a network connection feature.

A plug and play technique called UPnP (Universal Plug And Play) has been made available in recent years. UPnP is a technique of automating various operations including that of installing a driver for connecting an electronic appliance to a network and that of defining an address that users used to be required to do manually. With the UPnP technique, it is now possible to incorporate not only personal computers and PDAs (personal digital assistants) but also home electric appliances such as microwave cookers and audio appliances to a network.

An apparatus equipped with the UPnP feature (to be referred to as UPnP appliance hereinafter) notifies its own status to other UPnP appliances each time its own status changes. The notification is multicast or broadcast. In other words, it is output to all the UPnP appliances connected to the LAN (local area network) to which the UPnP appliance belongs.

As pointed out above, UPnP is a technique of incorporating not only information equipment such as personal computers and PDAs but also home electric appliances such as microwave cookers and audio appliances. However, there are many electronic appliances that do not require any exchange of information. If the information transmitted from such electronic appliances that do not require any exchange of information is processed, the load of processing the received information will become enormous. Additionally, buffers and memories may be wasted if unnecessary information is received.

For example, it is not necessary for an audio replay apparatus to communicate with a printer. While a printer transmits its status periodically for its configuration, the information on the status is meaningless to the audio replay apparatus. If the audio replay apparatus receives unnecessary data while it is receiving data being transmitted successively typically by audio streaming, the space of the hardware buffer will become occupied by the unnecessary data. To analyze if the received data are necessary or unnecessary, the software needs to take out data from the hardware buffer, judge if they are necessary or unnecessary and discard any unnecessary data. The workload on the part of the software will become enormous if it is forced to reproduce streaming data and, at the same time, discard unnecessary data.

Known techniques for discarding unnecessary data in a ring LAN include a transmission frame filtering method adapted to check the MAC (media access control) address of the transmitter at the time of outputting an Ethernet frame and transmit the Ethernet frame to the transmission path if the MAC address is correct but transmit the Ethernet frame as abort frame if the MAC address is incorrect. However, this method has the objective of rejecting frames circulating through a ring LAN and hence is not adapted to selectively receive necessary data out of the data transmitted on a multicast basis or a broadcast basis.

### [Patent Document 1] Japanese Patent Application Laid-Open Publication No. 6-252932

In view of the above-identified circumstances, it is desirable to provide an electronic appliance whose load of processing the data transmitted from an external apparatus with which it does not require any communication is reduced.

According to the invention, the above object is achieved by providing an electronic appliance comprising: a reception means for receiving data transmitted through a communication path of a network; a temporary storage means for temporarily storing the data received by the reception means; a communication means for communicating with an external appliance existing on the network; an attribute information acquisition means for acquiring attribute information of the external appliance; a judging means for judging if it is necessary or unnecessary to communicate with the external appliance on the basis of the attribute information of the external appliance; an address recording means for recording the address of the external appliance on the network depending on the outcome of the judgment of the judging means; and a data selection control means for rejecting the data from the external appliance if it does not require any communication but storing the data from the external appliance in the temporary storage means if it requires communication by referring to the appliance address recording means. Thus, the data from an external appliance with which it is unnecessary to communicate with are rejected without being stored in the temporary storage means.

Thus, according to the invention, it is no longer necessary to receive unnecessary data and hence the workload of processing unnecessary data is alleviated because an electronic appliance according to the invention acquires attribute information of an external appliance existing on a network, judges if it is necessary or unnecessary to communicate with the external appliance on the basis of the attribute information and reject the data from the external appliance if it is unnecessary to communicate with the latter.

Additionally, according to the invention, the workload on the part of the software is alleviated because the hardware is adapted to reject data and it is now possible to avoid any overflow of the hardware buffer because unnecessary data are not accumulated in the hardware buffer.

The invention will now be described with reference to the following non-limiting drawings:
FIG 1 is a schematic block diagram of a LAN, illustrating the configuration thereof;
FIG 2 is a schematic block diagram of an electronic appliance according to the invention, illustrating the internal configuration thereof;
FIG 3 is a schematic block diagram of a LAN card, illustrating the internal configuration thereof;
FIGS. 4A and 4B are schematic illustrations of the retrieval process of a device;
FIGS. 5A and 5B are schematic illustrations of the device description acquiring process of a device;
FIGS. 6A and 6B are schematic illustrations of the service description acquiring process of a device;
FIG 7 is a flow chart of the flow of the rejected address registering process; and
FIG 8 is a flow chart of the flow of the frame filtering process.

The present invention provides an electronic appliance equipped with an Ethernet (trade name) port and is applicable to a LAN (local area network) card that is a part for adding an Ethernet port to an electronic appliance. Ethernet represents a communication method standardized by IEEE (Institute of Electrical and Electronics Engineers Inc.). With Ethernet, data flowing through a communication path are divided into packets, which are called Ethernet frames, for transmission. The address of the sender and that of the destination of each Ethernet frame are recorded on the header of the frame. The address of the sender and that of the destination are referred to as MAC addresses. A MAC address is a unique physical address that is assigned to each and every Ethernet port.

An electronic appliance equipped with an Ethernet port can be connected to a LAN. The electronic appliance may be an information processing apparatus such as a personal computer, a PDA (personal digital assistant) or a network terminal, a communication apparatus such as a portable telephone set or PHS (personal handy phone), a peripheral apparatus such as a printer or a scanner or a home electric appliance such as a television set, a DVD player or an HD (hard disc) recorder.

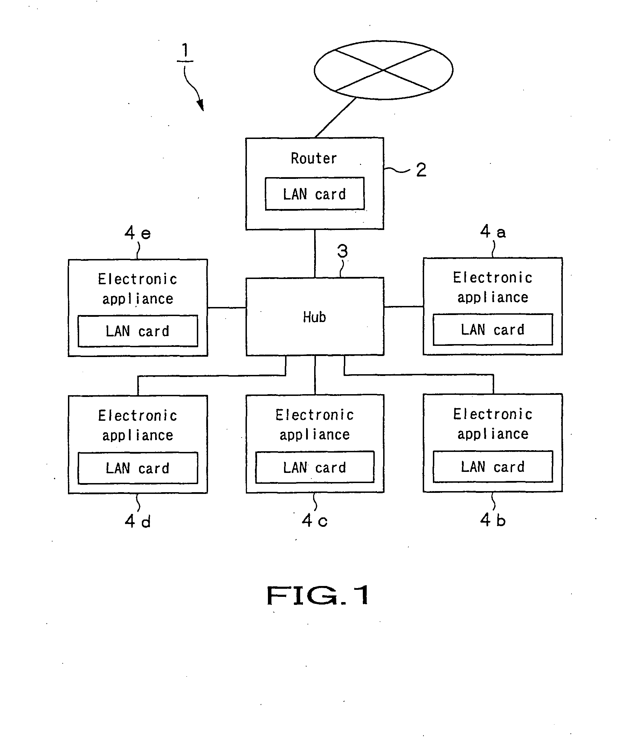

Referring to FIG 1, LAN 1 includes a router 2, a hub 3 and electronic appliances 4a through 4e. The plural electronic appliances 4a through 4e are connected to the single hub 3. The hub 3 is connected to the router 2. The router 2 is by turn connected to an external network such as the Internet. Note, however, FIG 1 illustrates only an exemplary configuration of a LAN. For the purpose of the present invention, the LAN may be configured differently so long as it includes a DHCP server (as will be described in greater detail hereinafter) and a plurality of electronic appliances 4a through 4e. The hub 3 may be replaced by a wireless LAN.

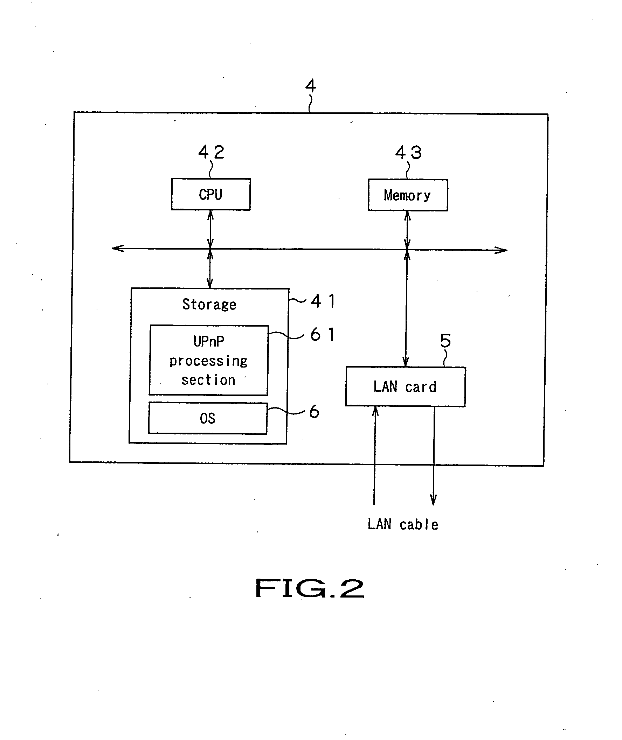

The electronic appliances 4a through 4e have a same configuration. Therefore, the electronic appliances 4a through 4e will be expressed simply as electronic appliances 4 hereinafter. Referring now to FIG 2, each of the electronic appliances 4 comprises a storage 41 for storing programs such as a UPnP processing program and an OS (operating system), a CPU 42 for executing the Programs, a memory 43 that operates as work area of the CPU 42 and a LAN card 5 for transmitting the data processed in the electronic appliance 4 to a physical medium such as a LAN cable.

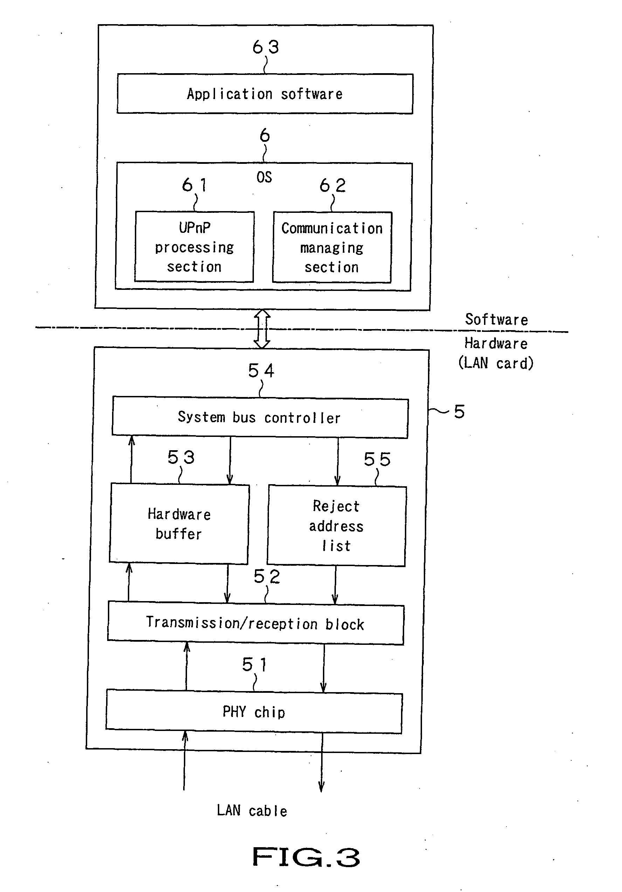

Referring now to FIG 3, the LAN card 5 comprises a PHY chip 51 for electrically modulating/demodulating the data flowing through the LAN cable, a transmission/reception block 52 for transmitting/receiving data, a hardware buffer 53 for temporarily storing the packets to be transmitted and the received packets, a system bus controller 54 for controlling the exchange of data between the bus of the mother board of the electronic appliance and the LAN card 5 and a reject address list 55 for recording a list of rejected Ethernet frames.

An Ethernet frame that flows through the LAN cable is firstly input to the PHY chip 51. The PHY chip 51 demodulates the Ethernet frame. The transmission/reception block 52 analyzes the demodulated Ethernet frame and judges that the Ethernet frame is addressed to itself when the address of the destination of the Ethernet frame is same as the MAC address assigned to itself or the address of the destination is a broadcast address or a multicast address.

After confirming the destination of the Ethernet frame, the transmission/reception block 52 carries out a filtering process on the Ethernet frame. A filtering process as used herein refers to a process of rejecting any unnecessary Ethernet frame. The MAC addresses of the electronic appliances 4 that transmit unnecessary Ethernet frames are registered in the reject address list 55. The transmission/reception block 52 rejects the received Ethernet frame when the MAC address of the sender electronic appliance 4 is registered in the reject address list 55.

The reject address list 55 is prepared when the electronic appliance 4 is driven to start operating. The electronic appliance 4 is equipped with a UPnP (Universal Plug and Play: tradename) feature. Specifications necessary for the electronic appliances 4 connected to a LAN 1 to mutually provide services are defined by the UPnP.

Now, a method by means of which the electronic appliance 4a prepares a reject address list 55, using the UPnP feature, will be described below. Note that all the other electronic appliances 4b through 4e prepare a reject address list 55 by means of the same method and hence the method will be described only for the electronic appliance 4a.

When the electronic appliance 4a is driven to start operating, it acquires an IP address, information on the external electronic appliances 4b through 4e (device descriptions) and information on the services that the external electronic appliances 4b through 4e provide (service descriptions). These pieces of information are delivered to UPnP processing section 61, which will be described in greater detail hereinafter. The UPnP processing section 61 selects the electronic appliances 4a through 4e that the electronic appliance 4 does not have to communicate with by referring to the contents of the device descriptions and the service descriptions and registers the MAC addresses of those electronic appliances 4a through 4e in the reject address list 55.

The transmission/reception block 52 rejects any Ethernet frame sent from a sender whose address is registered in the reject address list 55 and stores only the Ethernet frames sent from senders whose addresses are not registered in the reject address list 55 in the hardware buffer 53.

As an Ethernet frame is stored in the hardware buffer 53, the system bus controller 54 interrupts the operation of the CPU 42. Then, the CPU 42 reads out the Ethernet frame stored in the hardware buffer 53 in response to the interrupt. The read process may alternatively be carried out by an input/output control device (not shown) such as a DMA (direct memory access) controller or a channel. The read out Ethernet frame is managed by software such as OS (operating system) 6, UPnP processing section 61 or application software 63.

The OS 6 comprises a communication managing section 62 and a UPnP processing section 61. The communication managing section 62 removes the IP header and the TCP (transmission control protocol) header from the Ethernet frame and delivers the data to proper application software 63 by referring to the port number.

The UPnP processing section 61 acquires the IP address of the electronic appliance 4a and also information on the other electronic appliances 4b through 4e connected to the LAN 1. More specifically, it uses a piece of software that is referred to as DHCP client to acquire the IP address. If it is not possible for the UPnP processing section 61 to acquire the IP address by means of the DHCP client, it acquires the IP address by means of an AutoIP feature. These processing operations are carried out when the electronic appliance 4a is driven to start operating.

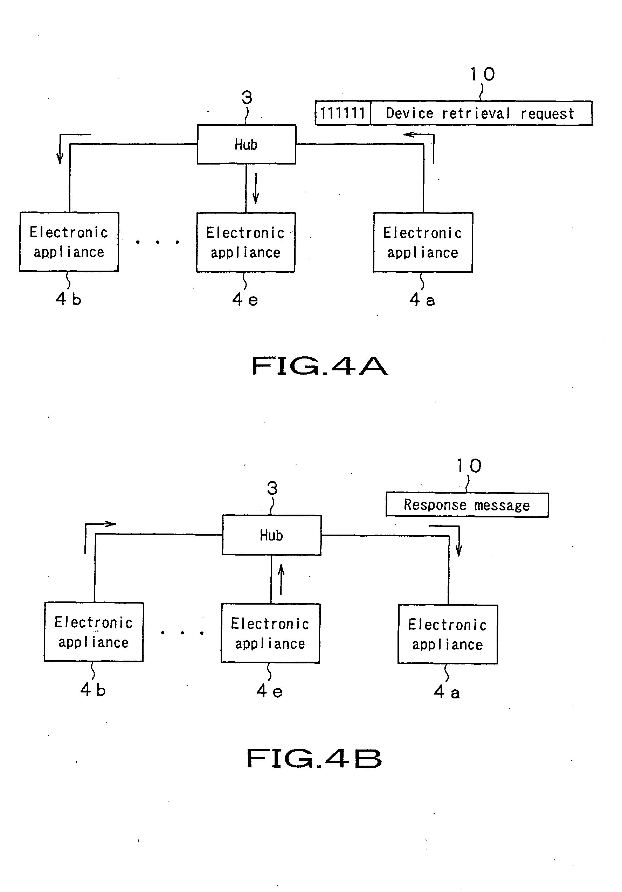

When its own addressing is completed, the UPnP processing section 61 transmits a device retrieval request 10 on a multicast basis (see FIG 4A). Multicast takes place when the address of a specific group is equal to "1". Broadcast takes place when the addresses of all groups are equal to "1 ". Upon receiving the device retrieval request 10, each of the electronic appliances 4b through 4e sends back a response message 11, showing its own existence (see FIG 4B). The response message 11 describes the URL (uniform resource locator) that indicates the location of the own device description.

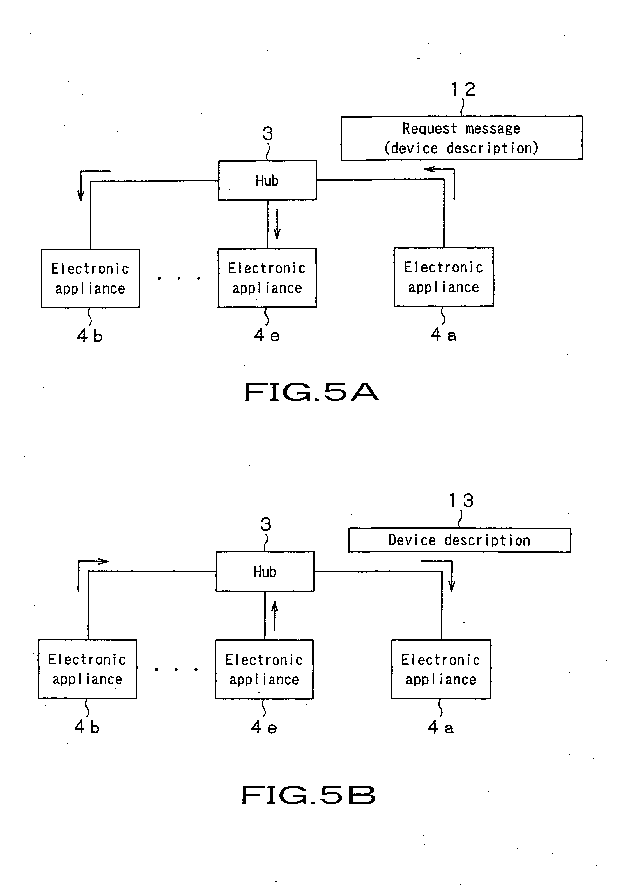

Then, the UPnP processing section 61 transmits a request message 12 to each of the electronic appliances 4b through 4e that are specified by the URL for a device description (see FIG 5A). Upon receiving the request message 12, each of the electronic appliances 4b through 4e sends back its own device description 13 (see FIG 5B). The device description 13 describes attribute information including the device name and the icon of the electronic appliance.

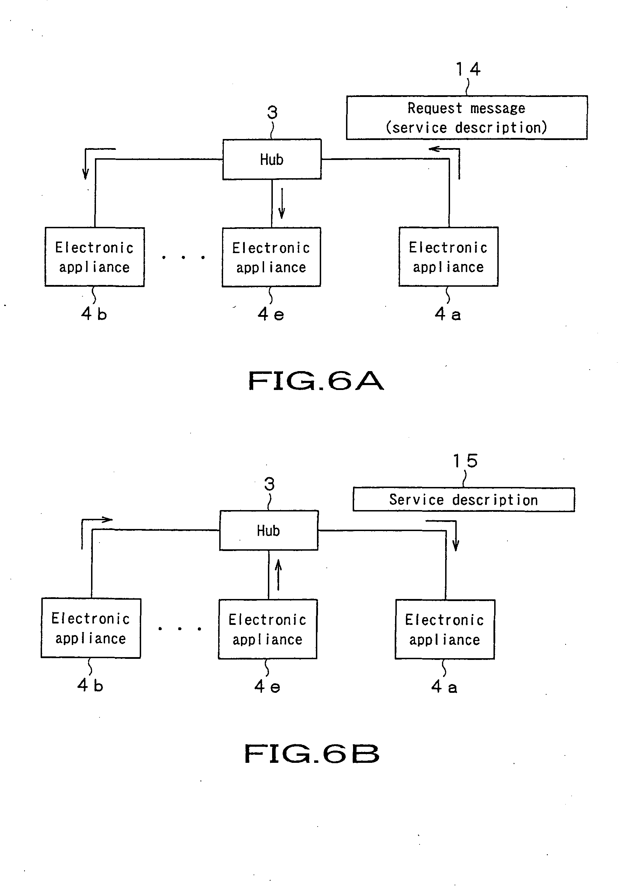

The device description 13 also describes the URL of the service description of the electronic appliance. Thus, the UPnP processing section 61 transmits a request message 14 to each of the electronic appliances 4b through 4e that are specified by the URL for a service description (see FIG 6A). Upon receiving the request message 14, each of the electronic appliances 4b through 4e sends back its own service description 15 (see FIG. 6B). The service description 15 describes the name and the type of the service that the electronic appliance provides along with attribute information relating to the service.

The UPnP processing section 61 prepares a reject address list 55 by referring to the contents of the device description and those of the service description. The electronic appliance 4a does not register any electronic appliance that provides a service in the reject address list 55. For example, if any of the electronic appliances 4b through 4e is an audio replay apparatus, it receives a service of delivery of audio contents from an audio server. Thus, the electronic appliance 4a does not register the MAC address of any of the electronic appliances 4b through 4e that requires communication in the reject address list 55.

On the other hand, the audio replay apparatus does not have to communicate with a peripheral apparatus such as a printer or a scanner or a home electric appliance such as a refrigerator or a microwave cooker. Thus, the UPnP processing section 61 registers the MAC address of any of the electronic appliances 4b through 4e that does not require communication in the reject address list 55.

The UPnP processing section 61 checks not only the type of each of the electronic appliances 4b through 4e but also the service that the electric appliance 4 provides when it judges if the electronic appliance requires communication or not. For instance, if a printer provides a service of delivering music contents or a remote control service for an audio replay apparatus, the UPnP processing section 61 does not register the MAC address of the printer in the reject address list 55. However, if an audio server provides a service of delivering audio contents in a format with which any audio replay apparatus cannot reproduce audio contents, the UPnP processing section 61 registers the MAC address of the audio server in the reject address list 55.

The LAN card 5 holds the reject address list 55. According to the present invention, no significant load is applied to the software because hardware such as the LAN card 5 executes a rejection process for the purpose of the invention. Additionally, it is possible to avoid a phenomenon of overflow from taking place at the hardware buffer 53 because the electronic appliance 4a does not store any unnecessary Ethernet frame in the hardware buffer 53.

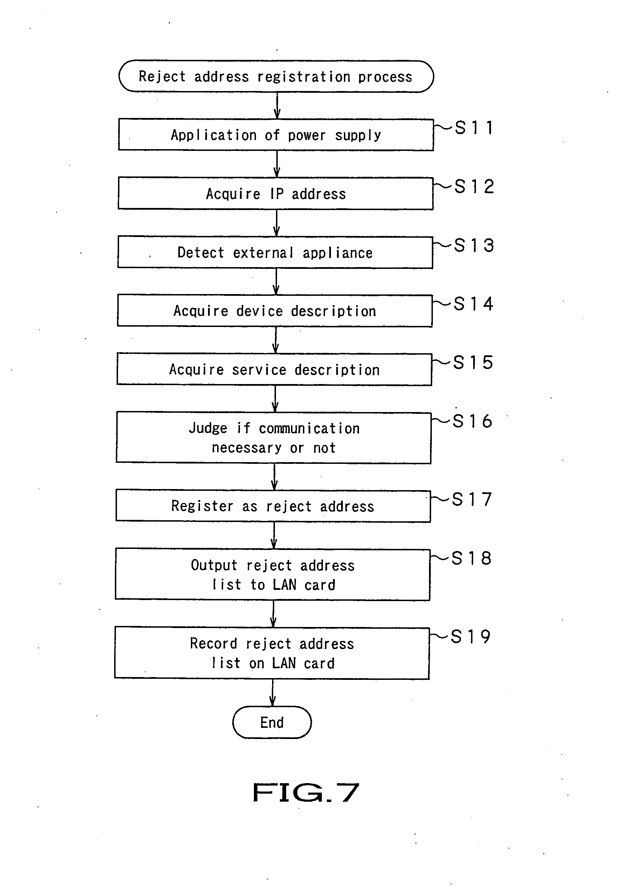

Now, the registration process of the reject address list 55 of the electronic appliance 4a will be described by referring to FIG 7. It is assumed in the following description that the electronic appliance 4a is an audio replay apparatus and the electronic appliances 4b through 4e include an audio server and a printer. As in the case of FIG 1, the audio replay apparatus, the audio server and the printer are connected to a hub 3 and the hub 3 is connected by turn to a router 2.

The UPnP processing section 61 is driven to start operating as the power switch is turned on by the user to supply power to the audio replay apparatus (Step S11). Then, the UPnP processing section 61 firstly acquires the IP address of its own by means of the DHCP feature or the AutoIP feature (Step S 12). Thereafter, the UPnP processing section 61 transmits a device retrieval request on a multicast basis. The packet that is transmitted on a multicast basis arrives at all the terminals on the LAN 1 including the router 2, the audio server and the printer. Then, each of the router 2, the audio server and the printer sends back a response message showing its own existence. Thus, the UPnP processing section 61 detects each of the electronic appliances 4b through 4e that are connected to the LAN 1 by mean of the response message (Step S 13). Then, the UPnP processing section 61 transmits a request message for a device description to each of the detected electronic appliances 4b through 4e and acquires in return the device description from each of the electronic appliances 4b through 4e (Step S 14).

The device description describes the URL that indicates the location of the service description of the device. Thus, the UPnP processing section 61 transmits a request message for a service description to each of the detected electronic appliances 4b through 4e by way of the URL described in the device description of the device and acquires in return the service description from each of the electronic appliances 4b through 4e (Step S 15).

The UPnP processing section 61 then judges each of the responded electronic appliances 4b through 4e for the need of communication on the basis of the contents of the device description and those of the service description it has acquired (Step S16). Then, it registers the MAC address of each of the electronic appliances 4b through 4e that it judges to be not in need of communication in the reject address list 55 (Step S17).

Now, the operation of Step S16 and that of Step S 17 will be described in greater detail by referring to the router 2, the audio server and the printer. The UPnP processing section 61 analyzes each of the device descriptions it acquires and, if it is found that the electronic appliance described in one of the device descriptions is a router 2, it does not register the MAC address of the router 2 in the reject address list 55 because the router 2 is an electric appliance necessary for communications.

The UPnP processing section 61 also analyses each of the remaining device descriptions and, if it is found that the electronic appliance described in of one of the device descriptions is an audio server, it reads out the corresponding service description. The service description describes the type of the contents that the audio server provides. If it is found that the audio server provides contents that the audio replay apparatus cannot reproduce, the UPnP processing section 61 registers the MAC address of the audio server in the reject address list 55. If, on the other hand, it is found that the audio server provides contents that the audio replay apparatus can reproduce, the UPnP processing section 61 does not register the MAC address of the audio server in the reject address list 55.

The UPnP processing section 61 further analyzes each of the remaining device descriptions and, if it is found that the electronic appliance described in one of the device descriptions is a printer, the UPnP processing section 61 registers the MAC address of the printer in the reject address list 55. No problem arises if the data of the printer are discarded because a printer is not related to the audio replay apparatus.

The UPnP processing section 61 outputs the reject address list 55 prepared in the above-described manner to the system bus controller 54 of the LAN card 5 (Step S18). The system bus controller 54 records the reject address list 55 in the LAN card 5 (Step S19). Thus, the process of preparing the reject address list 55 is completed. Thereafter, the transmission/reception block 52 starts a filtering process on the Ethernet frame.

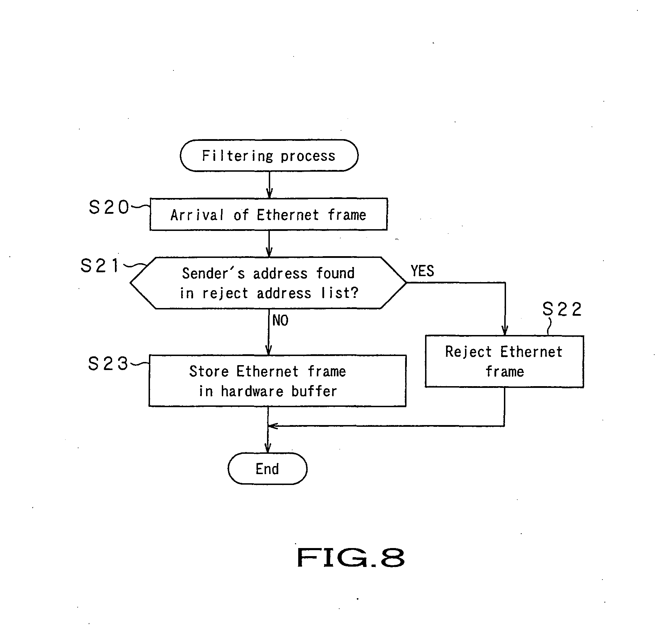

FIG 8 is a flow chart of the flow of the frame filtering process. As the Ethernet frame flowing through the LAN cable arrives at the audio replay apparatus (Step S20), the transmission/reception block 52 reads out the address of the sender of the Ethernet frame and compares it with the MAC addresses registered in the reject address list 55. If the transmission/reception block 52 finds a MAC address that agrees with the address of the sender (Step S21; YES), it rejects the Ethernet frame (Step S22). If, on the other hand, the transmission/reception block does not find a MAC address that agree with the address of the sender (Step S21; NO), it stores the Ethernet frame in the hardware buffer 53 (Step S23).

As described above in detail, the electronic appliance 4a according to the invention is adapted to acquire attribute information of each of the electronic appliances 4b through 4e that are connected to the LAN 1 and if any of the electronic appliances 4b through 4e does not require any communication, it rejects the Ethernet frame sent from it. Thus, the electronic appliance 4 according to the invention is free from any load that arises when hardware such as the LAN card 5 executes a rejection process and becomes applied onto the CPU 42 and the memory 43. Additionally, since the electronic appliance 4a does not store any unnecessary Ethernet frame in the hardware buffer 53, it is possible to avoid a phenomenon of overflow from taking place at the hardware buffer 53.

It may be appreciated that the present invention is not limited to the above-described embodiment. For example, an embodiment may be so adapted as to prepare a necessary appliance address list where the addresses of electronic appliances that require communication are registered and the Ethernet frame transmitted from any of them is rejected when the address of the sender is not found in the necessary appliance address list.

It should be understood by those skilled in the art that various modifications, combinations, sub-combinations and alterations may occur depending on design requirements and other factors insofar as they are within the scope of the appended claims or the equivalents thereof.

## Claims

1. An electronic appliance equipped with a network connection function, comprising:
reception means for receiving data transmitted through a communication path of a network;
temporary storage means for temporarily storing the data received by said reception means;
communication means for communicating with an external appliance existing on the network;
attribute information acquisition means for acquiring attribute information of the external appliance;
judging means for judging if it is necessary or unnecessary to communicate with the external appliance on the basis of the attribute information of the external appliance;
address recording means for recording the address of the external appliance on the network in accordance with the outcome of the judgment of the judging means; and
data selection control means for rejecting the data from the external appliance with which is not required any communication but storing the data from the external appliance with which is required communication in the temporary storage means by referring to the address recording means.

2. The appliance according to claim 1, wherein the address recording means records the address on the network of each external appliance with which is not required any communication.

3. The appliance according to either claim 1 or claim 2, wherein the address recording means records the address on the network of each external appliance with which is required communication.

4. The appliance according to any one of the preceding claims, wherein the address on the network is a unique physical address assigned to the external appliance.

5. The appliance according to any one of the preceding claims, wherein
the attribute information includes information on the service that the external appliance provides; and
the judging means judges that the external appliance is not required any communication if it does not provides any service to the electronic appliance.

6. The appliance according to any one of the preceding claims, wherein the data selection control means is mounted in a piece of hardware that operates as interface between the electronic appliance and the communication path of the network.

7. An electronic appliance equipped with a network connection function, comprising:
reception section that receives data transmitted through a communication path of a network;
a temporary storage section that temporarily stores the data received by said reception section;
a communication section that communicates with an external appliance existing on the network;
an attribute information acquisition section that acquires attribute information of the external appliance;
a judging section that judges if it is necessary or unnecessary to communicate with the external appliance on the basis of the attribute information of the external appliance;
an address recording section that records the address of the external appliance on the network in accordance with the outcome of the judgment of the judging section; and
a data selection control section that rejects the data from the external appliance with which is not required any communication but stores the data from the external appliance with which is required communication in the temporary storage section by referring to the appliance address recording section.
